# NEW EUROPEAN PATENT SPECIFICATION

(11) **EP 2 100 070 B2**
(45) Date of publication and mention of the opposition decision: **11.09.2019**
(45) Mention of the grant of the patent: 18.05.2011
(21) Application number: 07860866.8
(22) Date of filing: 05.12.2007
(51) Int. Cl.: F16L 47/28, F16L 41/14

(54) **CONNECTION ASSEMBLY FOR THE CONNECTING OF A CYLINDRICAL BRANCH OF A PLASTIC PIPE, AND METHOD FOR THE ATTACHING OF A CYLINDRICAL BRANCH TO A PLASTIC PIPE**
VERBINDUNGSANORDNUNG ZUR VERBINDUNG EINER ZYLINDRISCHEN KUNSTSTOFFROHRVERZWEIGUNG SOWIE VERFAHREN ZUR BEFESTIGUNG EINER ZYLINDRISCHEN VERZWEIGUNG AN EINEM KUNSTSTOFFROHR
ENSEMBLE RACCORD POUR LE RACCORDEMENT D'UN BRANCHEMENT CYLINDRIQUE D'UN TUYAU EN MATIERE PLASTIQUE, ET PROCEDE POUR LA FIXATION D'UN BRANCHEMENT CYLINDRIQUE SUR UN TUYAU EN MATIERE PLASTIQUE

(30) Priority: 06.12.2006 NL 1033005
(43) Date of publication of application: 16.09.2009
(73) Proprietor: Wavin B.V., 8011 CW Zwolle (NL)
(72) Inventor: ROELFSEMA, Marcel, 9503 PB Stadskanaal (NL); REKERS, Gerrit, 8017 LB Zwolle (NL)
(74) Representative: Hoffmann Eitle
(86) International application number: PCT/NL2007/000302
(87) International publication number: WO 2008/069644

(56) References cited:
- EP-B1- 0 365 583
- DE-U1- 20 114 491
- FR-A- 2 269 673
- NL-C2- 1 007 329

## Description

The invention relates to a connection assembly for the connecting of a cylindrical branch of a plastic pipe.

EP 0 365 583 describes a connection assembly for the connecting of a cylindrical branch of a plastic pipe. In this connection assembly, a cylindrical insert pipe is inserted into an opening in the plastic pipe. At its end which is positioned in the plastic pipe, the insert pipe is provided with a flange or other type of widening. A blocking ring made of elastic material rests against the flange. The blocking ring has an outer diameter which, when fitted, is larger than the diameter of the opening in the plastic pipe. The known connection assembly is further provided with a lever which acts on the insert pipe. This lever can move the insert pipe outward in the radial direction of the plastic pipe. This brings the inside of the blocking ring against the plastic pipe, as a result of which the blocking ring locks the insert pipe in the outward radial direction with respect to the plastic pipe and also seals the connection. The lever locks the insert pipe in the inward radial direction of the plastic pipe.

A drawback of the known connection assembly is that, when it is used on a thin-walled pipe, deformations can easily occur in proximity to the opening in the pipe. As a result, a small lateral force acting on the connection means can, for example, be sufficient to expel the connection assembly from the opening in the pipe.

NL 1007329 describes a connection construction for connecting a profiled main pipe and a branch pipe. This document is considered to represent the closest prior art.

The object of the invention is to provide an improved connection assembly. A further object of the invention is to provide an improved method for the attachment of a branch to a plastic pipe.

This object is achieved by the connection assembly according to claim 1 and by the method according to claim 9.

The connection assembly according to claim 1 uses a deformable blocking ring which can assume a stretched and a folded form. At first, the blocking ring is stretched. In the stretched form, the blocking ring has an outer diameter which is preferably smaller than the diameter of the opening in the plastic pipe. The blocking ring can then easily be inserted through the opening in the plastic pipe.

Once one end of the insert pipe has been inserted into the opening of the plastic pipe, the insert pipe has to be fixed in the plastic pipe. In the case of the connection assembly according to the invention, this is achieved by moving the insert pipe outward in the radial direction of the plastic pipe. In this case, one end of the blocking ring is secured with respect to the plastic pipe, whereas the other end of the blocking ring is entrained outward by a flange of the insert pipe. This compressive force acting on the blocking ring causes the blocking ring to bend outward in its radial direction, as a result of which the outer diameter of the blocking ring increases. The outward bending brings the blocking ring into its folded state. During outward bending, preferably the bottom edge of the blocking ring (i.e. the edge which is inserted deepest in the plastic pipe) is held substantially in place, whereas a portion of the blocking ring bends outward at a certain distance from the bottom edge, so a portion of the blocking ring that is intended for this purpose is to a greater or lesser extent doubled up. The outer diameter of the blocking ring thus does not increase or increases only slightly at the site of the bottom edge; the diameter is enlarged, in particular, at a certain distance from the bottom edge.

The outer diameter of the blocking ring is, in its folded form, enlarged with respect to the outer diameter in the stretched form in such a way that, in the folded form, the outer diameter is larger than the diameter of the opening in the pipe. In its folded form, the blocking ring therefore prevents the insert pipe from being drawn out of the opening in the plastic pipe.

The blocking ring, in its folded form, also produces the seal between the plastic pipe and the insert pipe. This can be achieved by tight clamping of a portion of the blocking ring between the insert pipe and the annular wall of the opening in the plastic pipe. This clamping can be reinforced by providing at least a portion of the insert pipe with an outer wall extending conically outward, there optionally being adjacent to a widened cylindrical portion having a diameter which is equal to the largest diameter of the conical portion. In this case, the space between the insert and the annular wall of the opening in the plastic pipe becomes smaller when the insert pipe is tightened in the opening of the plastic pipe, thus clamping the blocking ring more tightly.

From the point of view of sealing, it is advantageous if the blocking ring rests at least partially against the inner surface of the plastic pipe.

In the connection assembly according to the invention, the force required for the fastening of the connector by the locking means is transmitted to the outer surface of the plastic pipe to which the branch is fastened. As a result of the fact that the insert pipe rests, via its flange and the blocking ring, on the inner surface of the plastic pipe, the wall of the plastic pipe is in fact clamped between the flange of the insert pipe and the blocking ring, on the one hand, and the locking means, on the other hand. This ensures that the resulting deformation of the wall of the plastic pipe is small. This ensures that the connection assembly according to the invention is particularly suitable for use in combination with thin-walled plastic pipes.

In an advantageous embodiment, the locking means rests on a support plate which, in turn, rests on the outer surface of the plastic pipe. The support plate distributes the mechanical load exerted by the locking means over a larger portion of the outer surface of the plastic pipe, thus preventing local peak loads as far as possible. In this embodiment, the deformation of the pipe is restricted still further in the immediate vicinity of the opening.

The above-described connection assembly is suitable, inter alia, for use in plastic sewer pipes.

Known are plastic sewer pipes which are provided on their outer surface with ridges. The ridged profile can have various forms. The ridges can thus be narrow and solid or wide and hollow. An example of a ridged pipe is described in Dutch patent application NL 1026383. The height, weight and pitch of the ridges can vary among the various types of ridged pipes.

The second aspect of the invention (presently not claimed) provides a connection assembly comprising a support plate, which support plate is provided with an upper plate and with ribs which are substantially perpendicular to the upper plate, which ribs have substantially the same height and the same pitch as the ridges on the outer surface of the plastic pipe. According to the second aspect of the invention, the mutual position of the ribs and upper plate is variable. By making the mutual position of the ribs and upper plate variable, the support plate according to the invention can be adapted to the plastic pipe in combination with which the support plate is used.

The position of the ribs relative to one another and of the ribs with respect to the upper plate can be made variable by providing the upper plate with one or more recesses and/or one or more cams for the at least partial receiving of a rib. Preferably, the rib and upper plate are connected by a click connection and/or a sliding connection.

The support plate according to the second aspect of the invention (presently not claimed) can be used in the connection assembly according to claim 1 but also in combination with a different connection assembly.

When using a support plate in a connection assembly according to the first aspect of the invention, regardless of whether or not it is a support plate according to the second aspect of the invention, it is advantageous if the support plate has one or more projections which, when fitted, hold the support ring in place. This projection can also be provided in the form of a protruding edge which blocks displacement of the support ring in the outward radial direction of the plastic pipe.

The connection assembly according to the first aspect of the invention comprises displacement means for the moving of the insert pipe between the first and the second position.

The displacement means comprise at least one lever, which lever acts on the insert pipe. The lever also serves as a locking means by configuring the lever such that it is drawn over a dead centre position when the insert pipe is moved from the first to the second position, so the lever engages the insert pipe in the second position. Instead of a single lever, there may also be provided a plurality of levers, for example two diametrically opposing levers. This ensures that the force is distributed symmetrically.

In an advantageous embodiment, the support ring is configured as a split ring. This facilitates assembly.

In an advantageous embodiment, the insert pipe has a conical widening in proximity to its end on the side which is intended to be inserted into the opening in the plastic pipe. This improves the deformation behaviour of the blocking ring. As a result of the conical shape of the insert pipe, the radial space for the blocking ring in the opening becomes smaller when the insert pipe is moved outward in the radial direction of the plastic pipe. This compresses the blocking ring in the radial direction, producing a better seal.

In an advantageous embodiment, the blocking ring has a groove extending around the inner circumference of the blocking ring. This leads to more predictable and more easily manageable deformation behaviour of the blocking ring.

In an advantageous embodiment, the insert end is to be coupled to a loose sleeve. To prevent leakage, a ring seal can be provided in this coupling. At its free end (i.e. the end which is not inserted into the pipe), the insert pipe can be provided with a sleeve end.

In an advantageous embodiment, the sleeve and support plate are configured as an integral plastic component. Preferably, a plastic component of this type is provided with one or more openings through which the displacement means can act on the insert pipe.

The invention also relates to a method for the connecting of a branch to a plastic pipe according to claim 9.

The disclosure will be described hereinafter with reference to the appended drawings which show in a non-limiting manner non-claimed embodiments.

In the drawings:
Fig. 1 shows a connection assembly, with the insert pipe in the first position;
Fig. 2 shows the connection assembly according to Fig. 1, with the insert pipe in the second position;
Fig. 3 shows an alternative connection assembly according;
Fig. 4 shows a detail of the blocking ring in the stretched position;
Fig. 5 shows a detail of an alternative embodiment of the blocking ring in the stretched position and in the folded position;
Fig. 6 shows a second variation of the blocking ring;
Fig. 7 shows a third variation of the blocking ring;
Fig. 8 is an overview of the pipe comprising an opening;
Fig. 9 is an overview of an embodiment of the connection assembly according to the invention with an example of the support plate;
Fig. 10 shows two ribs of the support plate according to Fig. 9;
Fig. 11 shows a further embodiment of a support ring and blocking ring;
Fig. 12 shows the support ring according to Fig. 11; and
Fig. 13 is a partial cross section of the variation of Fig. 11.

The plastic pipe 1 has a wall 2 having an inner surface 3 and an outer surface 4. An opening 5 is formed in the plastic pipe 1. The opening 5 is used for the connecting of a branch. The "branch" may be both an outlet from and an inlet to the plastic pipe 1.

A connection assembly according to the invention is used to connect the branch to the plastic pipe 1.

The connection assembly 20 comprises an insert pipe 21. At its end which is inserted into the pipe 1, the insert pipe 21 has a flange 22. The flange 22 is provided in this example with a raised edge 23.

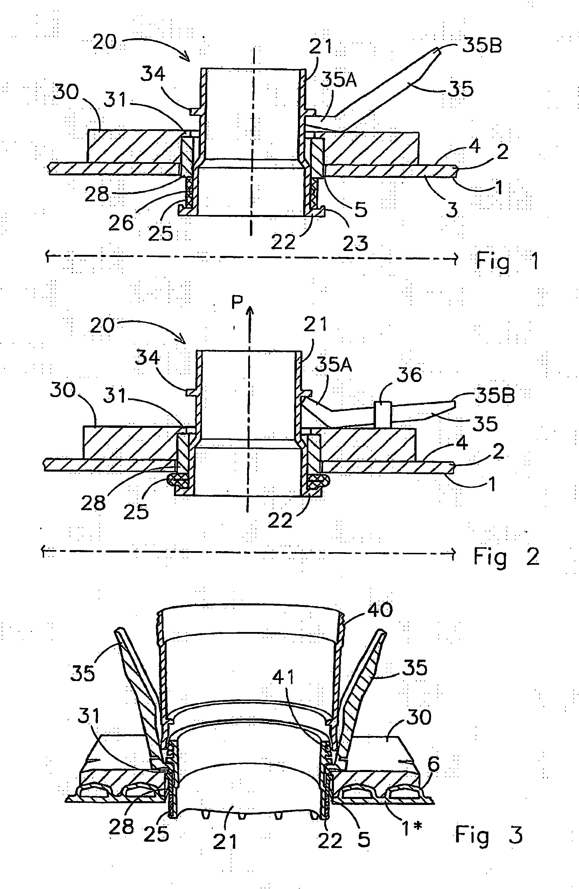

A blocking ring 25 is attached to the flange 22. In the situation of Fig. 1, the blocking ring 25 is in the stretched form. Fig. 2 shows the blocking ring in its folded form. The form of the blocking ring as shown in Fig. 2 may also be described as "doubled up" or "bent out". On its inner circumference, the blocking ring 25 is preferably provided with a groove 26. This groove 26 defines the site at which the blocking ring 25 bends out from the stretched to the folded form when an axial compressive force is exerted thereon.

Attached above the blocking ring is a support ring 28. The support ring 28 is not attached to the insert pipe 21. To facilitate fitting of the support ring 28, the support ring 28 is split in its longitudinal direction.

The support plate 30 is attached to the outer surface 4 of the pipe 1. The support plate 30 is provided with an edge 31 which holds the support ring 28 in place with respect to the pipe 1.

The connection assembly further comprises a lever 35. This lever 35 acts on the insert pipe 21. Moving the lever 35 allows the insert pipe 21 to be moved from a first position (see Fig. 1) to a second position (see Fig. 2). The lever can be configured in such a way that the dead centre position is passed when the insert pipe is moved from the first to the second position. This allows the lever 35 also to be used as a locking means because, once the dead centre position has been passed, the lever 35 prevents the insert pipe 21 from moving back toward the first position.

A branch is attached to a plastic pipe using a connection assembly according to the invention as follows:
The starting point is a plastic pipe 1 having an opening 5 in the pipe wall at the site where the branch will come. The opening 5 in the plastic pipe 1 is delimited by an annular wall.

In preparation for the attaching of a branch to the plastic pipe 1, a blocking ring 25 is attached to the insert pipe 21. The blocking ring 25 has in this case its stretched form (i.e. the form as shown in Fig. 1) and rests against the flange 22 of the insert pipe 21.

The blocking ring 25 is, for example, made of rubber, for example of the SBR or EPDM type. Hardnesses of between 40 and 60 Shore A have in practice proven to be a suitable choice.

Subsequently, the support ring 28 is attached to the insert pipe 21 and the insert pipe 21 is inserted with the blocking ring 25 and support ring 28 into the opening 5 of the pipe 1. Alternatively, it is possible first to attach the insert pipe 21 with the blocking ring 25 in the opening 5 of the pipe 1 and then to attach the support ring 28. The distance between the support ring 28 and the flange 22 of the insert pipe 21 is such that when the insert pipe 21 is introduced into the opening 5, the blocking ring is in its stretched form.

The configuration of the insert pipe 21 may be such that it is convenient if the support ring 28 is split in its axial direction, for example if the insert pipe is long or has projections which make the diameter locally larger than the inner diameter of the support ring 28.

The support ring 28 has an internal diameter such that the insert pipe 21 is able to move with respect to the support ring 28. The blocking ring 25 cannot - even in the stretched state - pass through the support ring 28 when the blocking ring is mounted to the insert pipe.

After the attaching of the insert pipe 21 with the blocking ring 25 in the opening 5 of the plastic pipe 1, the support ring 28 is fixed with respect to the plastic pipe 1. In the example of Figures 1, 2 and 3, this is carried out by attaching the support plate 30. The support plate 30 is provided with an edge 31 which prevents displacement of the support ring 28 in the outward radial direction of the plastic pipe 1.

The situation which is then reached is represented in Fig. 1. The position which the insert pipe assumes in this case is referred to as "the first position".

Subsequently, the insert pipe 21 is moved outward in the radial direction of the plastic pipe 1, i.e. in the direction indicated by arrow P in Fig. 2. This is carried out in the example provided by turning the lever 35. The end 35A of the lever 35 acts on the projection 34 (which in the example provided extends around the circumference of the insert pipe 21). Moving the end 35B of the lever 35 in the direction of the plate 30 causes the insert pipe 21 to move in the direction indicated by arrow P.

The displacement of the insert pipe in the direction indicated by arrow P moves the flange 22 closer to the support ring 28. As a result, a compressive force is exerted on the blocking ring 25 which accordingly bends outward. As a result, the outer diameter of the blocking ring 25 increases in such a way that the outer diameter of the blocking ring 25 becomes larger than the diameter of the opening 5 in the plastic pipe 1. As a result of this enlargement of the diameter, the blocking ring prevents the insert pipe 21 from being drawn out of the opening 5.

The situation which is then reached is represented in Fig. 2. The position which the insert pipe assumes in this case is referred to as "the second position".

To prevent the insert pipe 21 from returning to the first position, in the example of Fig. 2 the lever 35 is engaged by locking means 36. The locking means 36 may, for example, be a click or sliding connection. Additionally or alternatively, the lever may be designed in such a way that during the displacement of the insert pipe 21 from the first position to the second position, its dead centre position is passed through. This can also produce engagement.

The wall of the pipe 1 is then clamped between the blocking ring 25 and the plate 30. As a result, there is exerted merely a compressive force on the pipe wall. This limits the deformation of the pipe 1 in the vicinity of the opening 5. The plate 30 distributes the mechanical load, thus preventing local peak loads as far as possible. Accordingly, the deformation of the pipe 1 in the region of the opening 5 is restricted still further. The lever 35 rests on the plate 30 which, in turn, rests on the outer surface of the pipe 1. This allows the connection assembly to be adapted to thin-walled plastic pipes. It is, for example, not necessary to use a screw thread in the annular wall of the opening 5 in the pipe 1.

In the example of Figures 1 and 2, the seal between the plastic pipe 1 and the insert pipe 21 is provided in part by the blocking ring 25. It is in this case beneficial if the blocking ring 25 rests at least partially against the inner wall of the plastic pipe 1. However, the seal can also be provided in a different manner.

Fig. 3 shows an alternative embodiment of the connection assembly.

In this embodiment, two levers 35 are provided. In this way, the force is distributed more effectively. This variation can be used also in the other embodiments shown.

Fig. 3 also shows the use of the connection assembly in a ridged pipe 1*. The plate 30 is in this case adapted to the profile of the ridges 6 of the ridged pipe 1*. This variation can be used also in the other embodiments shown.

Fig. 3 also shows the coupling of the insert pipe 21 to the sleeve 40. To prevent leakage, a ringseal 41 is provided between the sleeve 40 and insert pipe 21. This variation can be used also in the other embodiments shown.

In an advantageous embodiment, the support plate 30 and the sleeve 40 are integrated in a single plastic component. Formed in the wall of this plastic component are openings through which the levers can act on the insert pipe 21.

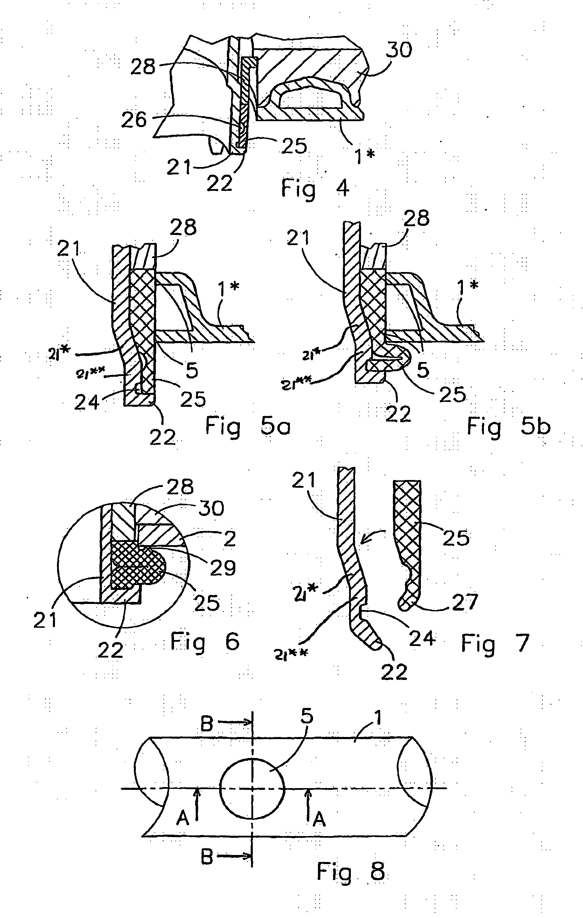

Fig. 4 shows a detail of the blocking ring 25 in the stretched position. The blocking ring 25 is provided on its inner circumference with a peripheral groove 26. The peripheral groove ensures that during the compression which occurs when the insert pipe 21 is displaced from the first to the second position, the blocking ring 25 bends out into its folded form in a predictable manner.

In Fig. 4, a portion of the blocking ring 25 is provided in the space between the annular wall of the opening 5 and the wall of the insert pipe 21. This ensures that the blocking ring 25 can be secured effectively, even in the folded form. This variation can be used also in the other embodiments shown.

Fig. 5 shows a detail of an alternative embodiment of the blocking ring in the stretched position (Fig. 5A) and in the folded position (see Fig. 5B).

In the embodiment of Fig. 5, a portion of the insert pipe 21 that is inserted into the opening 5 in the pipe 1* extends conically. The outer diameter of that portion is then also larger than that of the portion of the insert pipe thereabove. Adjoining the side of the conical portion 21*, the insert pipe 21 has in this example a widened cylindrical part 21** which has an outer diameter corresponding substantially to the largest outer diameter of the conical portion 21*. The location of the conically extending portion 21* and the widened cylindrical portion 21** of the insert pipe is selected in such a way that, in the second position of the insert pipe, the conical portion 21* and/or the widened cylindrical portion 21** are positioned at least in part next to the annular wall of the opening 5 in the plastic pipe (see Fig. 5b). In the example of Fig. 5, the wall thickness of the insert pipe 21 is at least substantially constant, as a result of which the internal diameter of the insert pipe 21 at the site of the conical portion 21* and the widened cylindrical portion 21** is also larger than elsewhere in the insert pipe 21. However, it is also possible to keep the internal diameter of the insert pipe 21 substantially constant and to increase the wall thickness at the site of the conical portion 21* and the widened cylindrical portion 21**.

Just as in the example of Fig. 4, a portion of the blocking ring 25 is located between the annular wall of the opening 5 and the insert pipe 21 (see Fig. 5A).

On displacement of the insert pipe, the conical portion of the insert pipe 21 moves next to the annular wall of the opening 5 (see Fig. 5B). The space between the insert pipe and the annular wall of the opening 5 narrows as a result of the widening of the insert pipe at the site of the conical portion 21* and the widened cylindrical portion 21**. As a result, the blocking ring 25 is clamped more tightly between the insert pipe 21 and the annular wall of the opening 5. The portion of the blocking ring that is positioned next to the annular wall is in this case compressed in its radial direction. This considerably improves both the seal between the plastic pipe 1* and the insert pipe and the tensile strength of the connection between the plastic pipe and the insert pipe. That is to say, it has been found in practice that the clamping of the blocking ring 25 between the insert pipe 21 and the annular wall of the opening 5 is an important factor influencing the effectiveness of the seal between the plastic pipe 1* and the insert pipe 21.

Fig. 5A clearly shows the groove 24 in the insert pipe 21, just above the flange 22. This groove helps to hold in position the bottom edge of the blocking ring 25 in the folded state (see Fig. 5b). The bottom edge of the blocking ring 25 does not come or hardly comes outward, whereas a portion of the blocking ring above this bottom edge bends outward and is doubled up.

Fig. 6 shows a variation of the blocking ring 25. At least one rib 29 is attached to the ring of Fig. 6. This rib improves the seal.

Fig. 7 shows a further variation of the blocking ring 25. In this variation, the blocking ring 25 is provided with an inwardly oriented lip 27. After mounting, this lip 27 is biased against the insert pipe 21. Preferably, the lip 27 is located after mounting in the groove 24 of the insert pipe 21. The lip 27 ensures in this case that the insert pipe 21 remains firmly in the groove 24 during displacement thereof from its first position to its second position.

The rib of Fig. 6 and the lip of Fig. 7 can be used also in other embodiments of the blocking ring 25.

Fig. 8 shows the plastic pipe 1 comprising the opening 5. As a result of the fact that the pipe wall is cylindrical, the annular wall of the opening 5 is not positioned in one flat plane. The flange 22 of the insert pipe is adapted thereto as a result of the fact that the angle between the flange 22 and the insert pipe 21 is not constant over the circumference of the insert pipe 21. In order to illustrate this, the flange 22 of Fig. 5 is at a different angle with respect to the remainder of the insert pipe 21 to that in Fig. 7. The situation of Fig. 5 corresponds to the situation on the line A-A of Fig. 8; the situation of Fig. 7 to the situation on the line B-B of Fig. 8.

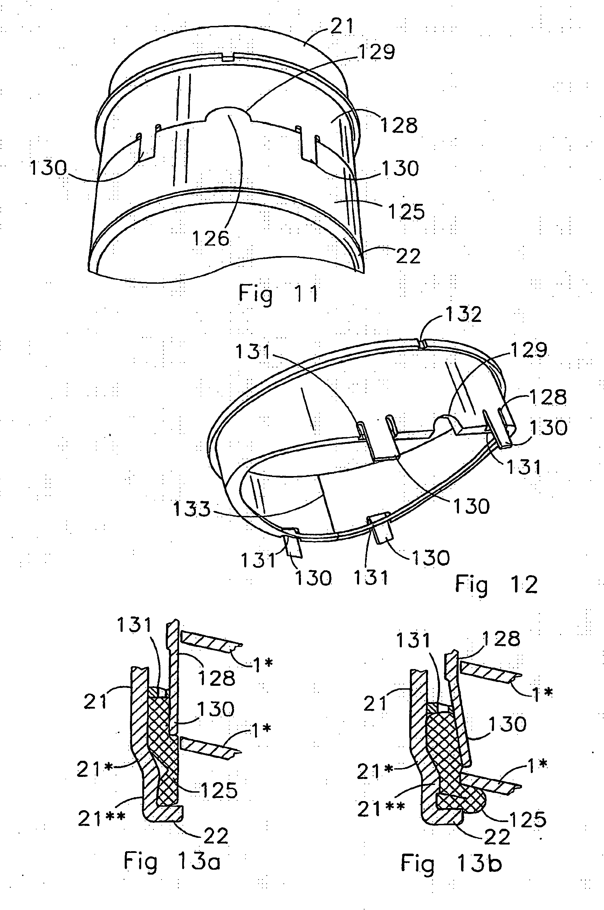

Fig. 11 shows a further embodiment of a support ring and blocking ring.

In this variation, the blocking ring 125 is provided with projections 126. These projections 126 fall in the assembled state into recesses 129 in the support ring 128, as a result of which the blocking ring 125 and the support ring 128 are locked in the circumferential direction with respect to each other.

In the variation of Fig. 11, the support ring 128 also has support lips 130. Provided in this case are four support lips 130 distributed over the circumference of the support ring 128. However, it is also possible for other numbers of support lips to be provided. The support lips 130 rest, when the connection assembly is assembled, against the outside of the blocking ring 125 and hold the blocking ring 125 against the insert pipe 21. The support lips 130 do not extend over the entire height of the blocking ring 125, so they do not impede the bending-out of the blocking ring 125 into the folded state.

Provided after the support lips 130 is preferably a support edge 131 against which the blocking ring 125 is drawn in the second position of the insert pipe 21. An advantage of this is that the blocking ring 125 is supported over its entire circumference. The support edge 131 is at a certain distance after the support lips 130, so the support lips 130 are able to bend resiliently.

The support lips 130 and the recess 129 do not have to be combined. A support ring 128 having either one or more support lips 130 or having just a recess 129 is also entirely possible.

Fig. 12 is a perspective view of the support ring according to Fig. 11. Fig. 12 clearly shows the support edge 131 which follows the support lips 130. The support ring, as shown in Fig. 12, further contains a cam 132 which can be used for the locking in the circumferential direction of the support ring 128 with respect to, for example, the insert pipe 21.

To facilitate assembly, in the example of Fig. 12 the support ring 128 is split by a splitting seam 133.

Fig. 13 is a partial cross section of the variation of Fig. 11. Fig. 13a shows the situation in which the insert pipe 21 is in the first position. The blocking ring 125 is in the stretched state. The interior wall of the pipe 1* rests loose against the blocking ring 125, or there is even some space between the blocking ring 125 and the wall of the pipe 1*. The support lip 130 holds the blocking ring 125 against the insert pipe 21. The support edge 131 of the support ring 128 rests against the upper side of the blocking ring 125.

The insert pipe 21 is provided in this example with a conically extending portion 21*. In the first position of the insert pipe, the conical portion 21* is not next to the annular wall of the opening in the pipe 1*. Located between the conical portion 21* and the flange 22 of the insert pipe 21 is a widened cylindrical portion 21** having an outer diameter which is equal to the largest outer diameter of the conical portion 21*.

Fig. 13b shows the situation in which the insert pipe 21 is in the second position. The insert pipe 21 is in this case displaced outward in the radial direction of the plastic pipe 18 to the extent that the conical portion 21* and/or the widened cylindrical portion 21** of the insert pipe 21 are located next to the annular wall of the opening in the plastic pipe 18. This reduces the space in the radial direction of the insert pipe between the insert pipe and the annular wall of the opening in the plastic pipe 1* and the blocking ring 125 is compressed in the radial direction. This compression improves the seal between the annular wall of the opening of the plastic pipe 1* and the insert pipe 21. The support lip 130 bends in this case resiliently outward somewhat but the blocking ring 125 still presses against the insert pipe 21.

The support edge 131 of the support ring 128 ensures that the blocking ring 125 cannot move along with the insert pipe 21 during the displacement of the insert pipe from the first position to the second position.

As a result of the movement of the insert pipe 21 from the first position to the second position, a portion of the blocking ring 125 is doubled up, as is shown in Fig. 13b. As a result, the outer diameter of the blocking ring 125 is locally enlarged, thus locking the insert pipe 21 in the plastic pipe.

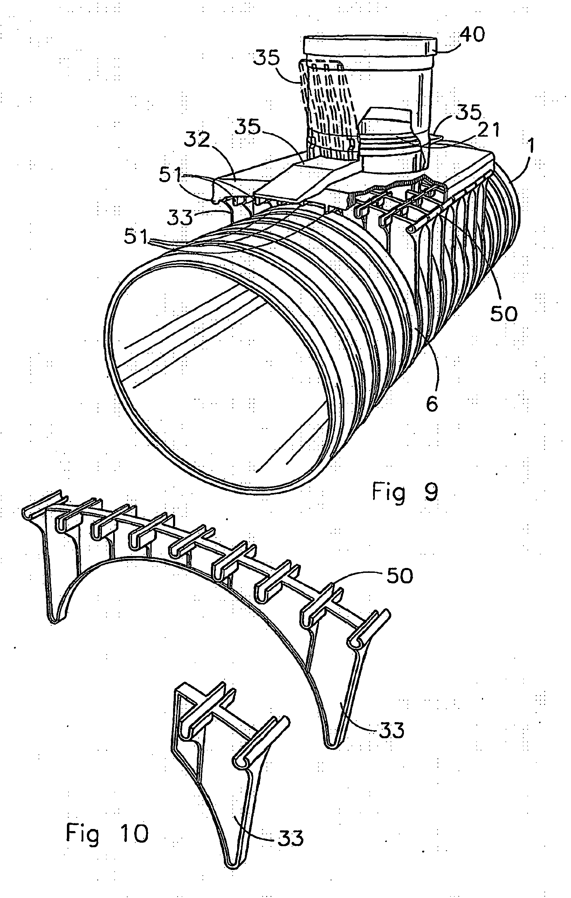

Fig. 9 is an overview of an embodiment of the connection assembly with an example of the support plate, Fig. 10 shows two ribs of the support plate according to Fig. 9.

The support plate 30 comprises in this example an upper plate 32 and ribs 33. The ribs 33 of the support plate fall between the ridges 6 of the ridged pipe 1*. The ribs 33 rest on the outer surface of the pipe 1* between the ridges 6.

In order to be able to use the support plate 30 in various geometries of the ridged pipe, it is advantageous to be able to vary the pitch of the ribs. It is also advantageous to be able to select the position of the ribs 33 with respect to the opening in the support plate so as to allow the insert pipe 21 to pass therethrough. As a result, a separate support plate does not have to be provided for each type of ridged pipe.

In the example of Figures 6 and 7, this is achieved by providing the upper plate 32 with cams 51. These cams 51 extend in this example over the length of the support plate 30, although in principle they can have any other desired form. In the configuration shown, each rib 33 can be fastened to the upper plate 32 at any desired position over the length of this upper plate 32.

On their upper sides, the ribs 33 are provided with a groove 50 which can receive a (portion of a) cam 51. Preferably, the shape of the groove 50 and the shape of the cam 51 are coordinated so as to produce a click connection between the upper plate and the respective rib.

## Claims

1. Connection assembly for the connecting of a cylindrical branch of a plastic pipe (1, 1*), which plastic pipe has a wall (2) having an inner surface (3), an outer surface (4) and a wall thickness, and there being provided in the wall an opening (5) for the connecting of the branch to the plastic pipe (1, 1*), which opening (5) is delimited by an annular wall, which connection assembly comprises:
- an insert pipe (21) which is to be inserted in the opening (5) in the wall (2) of the plastic pipe (1, 1*), which insert pipe (1, 1*) has a flange (22) having a maximum diameter which is smaller than the diameter of the opening (5) in the wall (2) of the pipe (1, 1*) and the outer diameter of the flange (22) being larger than the outer diameter of the insert pipe (21), which insert pipe (21) is displaceable with respect to the annular wall of the opening (5) between a first position and a second position in a direction which is substantially perpendicular to the axial direction of the pipe (1, 1*), the distance between the flange (22) of the insert pipe (21) and the inner surface (3) of the pipe (1, 1*) being larger in the first position than in the second position,
- displacement means (35) for moving of the insert pipe between the first and the second position, wherein the displacement means comprises a lever (35) which acts on the insert pipe,
- a support ring (28, 128) which is to be arranged between the insert pipe (21) and the annular wall of the opening (5) in the plastic pipe (1, 1*), which support ring (28, 128) has, when mounted, a substantially fixed position with respect to the annular wall of the opening (5) in the plastic pipe, (1, 1*) but which support ring (28, 128) is detached from the insert pipe (21),
- a locking means (36) for the securing of the insert pipe (21) in the second position, which locking means is supported directly or indirectly on the outer surface (4) of the pipe (1, 1*) in such a way that the force required for the securing of the insert pipe (21) in the second position is absorbed by the outer surface (4) of the pipe (1, 1*), wherein the lever also serves as locking means, by configuring the lever such that it is drawn over a dead centre position when the insert pipe is moved from the first to the second position, so that the lever engages the insert pipe in the second position,
wherein the connection assembly further comprises a deformable blocking ring (25, 125), which blocking ring (25, 125) can assume a stretched form which blocking ring (25, 125) is located between the flange (22) of the insert pipe (21) and the support ring (28, 128), the blocking ring having in the second position of the insert pipe an outer diameter which is larger than the diameter of the opening in the plastic pipe, **characterized in that** the blocking ring (25, 125) can also assume a folded form due to an outward bending of the blocking ring, the outer diameter of the blocking ring being larger in the folded form than in the stretched form, wherein the blocking ring (25, 125) is located between the flange (22) of the insert pipe (21) and the support ring (28, 128) in such a way that the blocking ring (25, 125) has, in the first position of the insert pipe (21), a substantially stretched form and, in the second position of the insert pipe (21), the folded form, wherein the blocking ring (25, 125), in its folded form, also produces a seal between the plastic pipe (1, 1*) and the insert pipe (21) by tight clamping of a portion of the blocking ring (25, 125) between the insert pipe (21) and the annular wall of the opening (5) in the plastic pipe.

2. Connection assembly according to claim 1, wherein the connection assembly further comprises a support plate (30) for the transmitting to the outer surface of the plastic pipe (1, 1*) of the force exerted by the locking means (36) for the securing of the insert pipe (21) in its second position.

3. Connection assembly according to claim 2, wherein the support plate (30) has at least one projection for the securing of the support ring (28, 128) with respect to the plastic pipe (1, 1*).

4. Connection assembly according to any one of the preceding claims, wherein the support ring (28, 128) is a split ring.

5. Connection assembly according to any one of the preceding claims, wherein the insert pipe (21) has a conical widening (21*) in proximity to its end on the side which is intended to be inserted into the opening in the plastic pipe (1,1*).

6. Connection assembly according to any one of the preceding claims, wherein the blocking ring (25, 125) has a groove (26) extending around the inner circumference of the blocking ring.

7. Connection assembly according to any one of the preceding claims, wherein the insert end is to be coupled to a loose sleeve.

8. Connection assembly according to claim 2, wherein the support plate (30) is integrated with a sleeve in a single plastic component.

9. Method for the attaching of a cylindrical branch to a plastic pipe (1, 1*), which plastic pipe has a wall (2) having an inner surface (3), an outer surface (4) and a wall thickness, which method includes the following steps:
- the forming of an opening (5) in the wall of the plastic pipe (1, 1*), which opening is delimited by an annular wall,
- the inserting of an insert pipe (21) in the opening (5) in the wall (2) of the plastic pipe (1, 1*), which insert pipe has a flange (22) having a maximum diameter which is smaller than the diameter of the opening (5) in the wall (2) of the pipe (1, 1*) and is larger than the outer diameter of the insert pipe (21),
- the arranging of a deformable blocking ring (25, 125) on the flange (22) of the insert pipe (21), which deformable blocking ring (25, 125) can assume a stretched and a folded form, the blocking ring (25, 125) being substantially in the stretched form during the arranging thereof to the flange (22) of the insert pipe (21), wherein the blocking ring (25, 125), in its folded form, also produces a seal between the plastic pipe (1, 1*) and the insert pipe (21) by tight clamping of a portion of the blocking ring (25, 125) between the insert pipe (21) and the annular wall of the opening (5) in the plastic pipe,
- the arranging of a support ring (28, 128) to the blocking ring (25, 125) in such a way that the support ring (28, 128) is located between the insert pipe (21) and the annular wall of the opening (5) in the wall (2) of the plastic pipe (1, 1*),
- the locking of the support ring (25, 125) with respect to the annular wall of the opening (5) in the wall of the plastic pipe (1, 1*), the support ring (25, 125) remaining detached from the insert pipe (21),
- the displacing of the insert pipe (21) using displacement means in such a way that the flange (22) of the insert pipe (21) is brought closer to the support ring (28, 128), the blocking ring (25, 125) being brought into its folded form due to an outward bending of the blocking ring, in which folded form the outer diameter of the blocking ring is larger than in the stretched form, and the blocking ring (25, 125) having, in the folded form, an outer diameter which is larger than the diameter of the opening (5) in the plastic pipe (21), the displacement means comprising a lever which acts on the insert pipe, so that the lever engages the insert pipe in the second position,
- the locking of the position of the insert pipe (21) with respect to the plastic pipe (1, 1*) using locking means in such a way that the folded form of the blocking ring (25, 125) is maintained, the force required for the locking being absorbed by the outer surface (4) of the plastic pipe (1, 1*) wherein the lever also serves as locking means, by configuring the lever such that it is drawn over a dead centre position when the insert pipe is moved from the first to the second position.

## Patentansprüche

1. Verbindungsanordnung zur Verbindung einer zylindrischen Kunststoffrohrverzweigung (1, 1*), wobei das Kunststoffrohr eine Wand (2) hat, aufweisend eine innere Oberfläche (3), eine äußere Oberfläche (4) und eine Wandstärke und in der Wand eine Öffnung (5) bereitgestellt ist, für das Verbinden der Verzweigung mit dem Kunststoffrohr (1, 1*), wobei die Öffnung (5) durch eine ringförmige Wand begrenzt ist, die Verbindungsanordnung umfassend:
- ein Einführrohr (21), das in die Öffnung (5) in der Wand (2) des Kunststoffrohrs (1, 1*) einzuführen ist, wobei das Einführrohr (1, 1*) einen Flansch (22) hat, aufweisend einen maximalen Durchmesser, der kleiner als der Durchmesser der Öffnung (5) in der Wand (2) des Rohrs (1, 1*) ist und der Außendurchmesser des Flansches (22) größer als der Außendurchmesser des Einführrohrs (21) ist, wobei das Einführrohr (21) verschiebbar ist, in Bezug auf die ringförmige Wand der Öffnung (5), zwischen einer ersten Position und einer zweiten Position, in einer Richtung, die im Wesentlichen senkrecht zu der axialen Richtung des Rohrs (1, 1*) ist, wobei der Abstand zwischen dem Flansch (22) des Einführrohrs (21) und der inneren Oberfläche (3) des Rohrs (1, 1*) in der ersten Position größer ist als in der zweiten Position,
- Verschiebungsmittel (35) zum Bewegen des Einführrohrs zwischen der ersten und der zweiten Position, wobei die Verschiebungsmittel einen Hebel (35) umfassen, der auf das Einführrohr einwirkt
- einen Stützring (28, 128), der zwischen dem Einführrohr (21) und der ringförmigen Wand der Öffnung (5) in dem Kunststoffrohr (1, 1*) anzuordnen ist, wobei der Stützring (28, 128), wenn montiert, eine im Wesentlichen feststehende Position in Bezug auf die ringförmige Wand der Öffnung (5) in dem Kunststoffrohr (1, 1*) hat, obwohl der Stützring (28, 128) von dem Einführrohr (21) freistehend ist,
- ein Verriegelungsmittel (36) für das Sichern des Einführrohrs (21) in der zweiten Position, wobei das Verriegelungsmittel direkt oder indirekt auf der äußeren Oberfläche (4) des Rohrs (1, 1*) in solch einer Weise gelagert ist, dass die benötigte Kraft zum Sichern des Einführrohrs (21) in der zweiten Position von der äußeren Oberfläche (4) des Rohrs (1, 1*) aufgenommen wird, wobei der Hebel auch als Verriegelungsmittel dient, durch Konfigurieren des Hebels in einer solchen Weise, dass er über eine Totpunktposition gezogen wird, wenn das Einführrohr von der ersten in die zweite Position in einer solchen Weise bewegt wird, dass der Hebel in das Einführrohr in der zweiten Position eingreift,
wobei die Verbindungsanordnung weiterhin einen verformbaren Blockierring (25, 125) aufweist, der Blockierring (25, 125) eine gestreckte Form annehmen kann, der Blockierring (25, 125) zwischen dem Flansch (22) des Einführrohrs (21) und dem Stützring (28, 128) angeordnet ist, der Blockierring in der zweiten Position des Einführrohrs einen Außendurchmesser aufweisend, der größer als der Durchmesser der Öffnung in dem Kunststoffrohr ist, **dadurch gekennzeichnet, dass** der Blockierring (25, 125) aufgrund einer Biegung nach außen des Blockierrings auch eine gefaltete Form annehmen kann, wobei der Außendurchmesser des Blockierrings in der gefalteten Form größer ist als in der gestreckten Form, wobei der Blockierring (25, 125) zwischen dem Flansch (22) des Einführrohrs (21) und dem Stützring (28, 128) in solch einer Weise angeordnet ist, dass der Blockierring (25, 125) in der ersten Position des Einführrohrs (21) eine im Wesentlichen gestreckte Form hat und in der zweiten Position des Einführrohrs (21) die gefaltete Form, wobei der Blockierring (25, 125) in der gefalteten Form auch eine Dichtung zwischen dem Kunststoffrohr (1, 1*) und dem Einführrohr (21) durch dichtes Einklemmen eines Abschnitts des Blockierrings (25, 125) zwischen dem Einführrohr (21) und der ringförmigen Wand der Öffnung (5) in dem Kunststoffrohr erzeugt.

2. Verbindungsanordnung gemäß Anspruch 1, wobei die Verbindungsanordnung weiterhin eine Stützplatte (30) für das Übertragen der Kraft zu der äußeren Oberfläche des Kunststoffrohrs (1, 1*) aufweist, ausgeübt durch die Verriegelungsmittel (36) zum Sichern des Einführrohrs (21) in seiner zweiten Position.

3. Verbindungsanordnung gemäß Anspruch 2, wobei die Stützplatte (30) zumindest einen Vorsprung hat, für das Sichern des Stützrings (28, 128) in Bezug auf das Kunststoffrohr (1, 1*).

4. Verbindungsanordnung gemäß einem der vorstehenden Ansprüche, wobei der Stützring (28, 128) ein Spaltring ist.

5. Verbindungsanordnung gemäß einem der vorstehenden Ansprüche, wobei das Einführrohr (21) eine konische Öffnung (21*) nahe seines Endes auf der Seite hat, die vorgesehen ist, in die Öffnung des Kunststoffrohrs (1, 1*) eingeführt zu werden.

6. Verbindungsanordnung gemäß einem der vorstehenden Ansprüche, wobei der Blockierring (25, 125) eine Nut (26) hat, sich um den inneren Umfang des Blockierrings erstreckend.

7. Verbindungsanordnung gemäß einem der vorstehenden Ansprüche, wobei das Einführende mit einer losen Hülse zu koppeln ist.

8. Verbindungsanordnung gemäß Anspruch 2, wobei die Stützplatte (30) mit einer Hülse in einem einteiligen Kunststoffbauteil integriert ist.

9. Verfahren zur Befestigung einer zylindrischen Verzweigung an einem Kunststoffrohr (1, 1*), wobei das Kunststoffrohr eine Wand (2) hat, aufweisend eine innere Oberfläche (3), eine äußere Oberfläche (4) und eine Wandstärke, wobei das Verfahren die folgenden Schritte einschließt:
- das Bilden einer Öffnung (5) in der Wand des Kunststoffrohrs (1, 1*), wobei die Öffnung durch eine ringförmige Wand begrenzt ist,
- das Einführen eines Einführrohrs (21) in die Öffnung (5) in der Wand (2) des Kunststoffrohrs (1, 1*), wobei das Einführrohr einen Flansch (22) hat, aufweisend einen maximalen Durchmesser, der kleiner ist als der Durchmesser der Öffnung (5) in der Wand (2) des Rohrs (1, 1*) und größer ist als der Außendurchmesser des Einführrohrs (21),
- das Anordnen eines verformbaren Blockierrings (25, 125) an dem Flansch (22) des Einführrohrs (21), wobei der verformbare Blockierring (25, 125) eine gestreckte und eine gefaltete Form annehmen kann, wobei der Blockierring (25, 125) während dessen Anordnens an dem Flansch (22) des Einführrohrs (21) im Wesentlichen in der gestreckten Form ist, wobei der Blockierring (25, 125) in seiner gefalteten Form auch eine Dichtung zwischen dem Kunststoffrohr (1, 1*) und dem Einführrohr (21) durch festes Einklemmen eines Abschnitts des Blockierrings (25, 125) zwischen dem Einführrohr (21) und der ringförmigen Wand der Öffnung (5) in dem Kunststoffrohr erzeugt,
- das Anordnen eines Stützrings (28, 128) an dem Blockierring (25, 125) in solch einer Weise, dass der Stützring (28, 128) zwischen dem Einführrohr (21) und der ringförmigen Wand der Öffnung (5) in der Wand (2) des Kunststoffrohrs (1, 1*) angeordnet ist,
- das Verriegeln des Stützrings (25, 125) in Bezug zu der ringförmigen Wand der Öffnung (5) in der Wand des Kunststoffrohrs (1, 1*), der Stützring (25, 125) freistehend von dem Einführrohr (21) bleibend,
- das Verschieben des Einführrohrs (21) in solch einer Weise, dass der Flansch (22) des Einführrohrs (21) näher zu dem Stützring (28, 128) gebracht wird, der Blockierring (25, 125) aufgrund einer Biegung nach außen des Blockierrings in seine gefaltete Form gebracht wird, in dessen gefalteter Form der Außendurchmesser des Blockierrings größer als in der gestreckten Form ist und der Blockierring (25, 125) aufweisend, in der gefalteten Form, einen Außendurchmesser, der größer ist als der Durchmesser der Öffnung (5) in dem Kunststoffrohr (21), wobei die Verschiebungsmittel einen Hebel umfassen, der auf das Einführrohr in solch einer Weise einwirkt, dass der Hebel in das Einführrohr in der zweiten Position eingreift,
- das Verriegeln der Position des Einführrohrs (21) in Bezug zu dem Kunststoffrohr (1, 1*) unter Verwendung von Verriegelungsmitteln in solch einer Weise, dass die gefaltete Form des Blockierrings (25, 125) beibehalten wird, wobei die zum Verriegeln benötigte Kraft durch die äußere Oberfläche (4) des Kunststoffrohrs (1, 1*) aufgenommen wird, wobei der Hebel auch als Verriegelungsmittel dient, durch Konfigurieren des Hebels in solch einer Weise, dass er über eine Totpunktposition gezogen wird, wenn das Einführrohr von der ersten Position in die zweite Position bewegt wird.

## Revendications

1. Ensemble de raccordement pour le raccordement d'une branche cylindrique d'un tuyau en plastique (1, 1*), lequel tuyau en plastique a une paroi (2) ayant une surface intérieure (3), une surface extérieure (4) et une épaisseur de paroi, et il est prévu dans la paroi une ouverture (5) pour le raccordement de la branche au tuyau en plastique (1, 1*), laquelle ouverture (5) est délimitée par une paroi annulaire, lequel ensemble de raccordement comprend :
un tuyau d'insertion (21) qui doit être inséré dans l'ouverture (5) dans la paroi (2) du tuyau en plastique (1, 1*), lequel tuyau d'insertion (1, 1*) a une bride (22) ayant un diamètre maximal qui est plus petit que le diamètre de l'ouverture (5) dans la paroi (2) du tuyau (1, 1*) et le diamètre extérieur de la bride (22) étant plus important que le diamètre extérieur du tuyau d'insertion (21), lequel tuyau d'insertion (21) peut être déplacé par rapport à la paroi annulaire de l'ouverture (5) entre une première position et une deuxième position dans une direction qui est sensiblement perpendiculaire à la direction axiale du tuyau (1, 1*), la distance entre la bride (22) du tuyau d'insertion (21) et la surface intérieure (3) du tuyau (1, 1*) étant plus importante dans la première position que dans la deuxième position,
- un moyen de déplacement (35) pour déplacer le tuyau d'insertion entre la première et la deuxième position, dans lequel le moyen de déplacement comprend un levier (35) qui agit sur le tuyau d'insertion,
- une bague d'appui (28, 128) qui doit être agencée entre le tuyau d'insertion (21) et la paroi annulaire de l'ouverture (5) dans le tuyau en plastique (1, 1*), laquelle bague d'appui (28, 128) a, lorsqu'elle est montée, une position sensiblement fixe par rapport à la paroi annulaire de l'ouverture (5) dans le tuyau en plastique (1, 1*), mais laquelle bague d'appui (28, 128) est détachée du tuyau d'insertion (21),
- un moyen de verrouillage (36) destiné à la fixation du tuyau d'insertion (21) dans la deuxième position, lequel moyen de verrouillage est supporté directement ou indirectement sur la surface extérieure (4) du tuyau (1, 1*) de telle manière que la force requise pour la fixation du tuyau d'insertion (21) dans la deuxième position soit absorbée par la surface extérieure (4) du tuyau (1, 1*), dans lequel le levier sert également de moyen de verrouillage, en configurant le levier de telle sorte qu'il est attiré au-dessus d'une position de point mort lorsque le tuyau d'insertion est déplacé de la première vers la seconde position, de sorte que le levier vient en prise avec le tuyau d'insertion dans la seconde position,
dans lequel l'ensemble de raccordement comprend en outre une bague de blocage (25, 125) déformable, laquelle bague de blocage (25, 125) peut prendre une forme étirée, laquelle bague de blocage (25, 125) est localisée entre la bride (22) du tuyau d'insertion (21) et la bague d'appui (28, 128), la bague de blocage ayant dans la deuxième position du tuyau d'insertion un diamètre extérieur qui est plus important que le diamètre de l'ouverture dans le tuyau en plastique, **caractérisé en ce que** la bague de blocage (25, 125) peut aussi prendre une forme pliée du fait d'un pliage vers l'extérieur de la bague de blocage, le diamètre extérieur de la bague de blocage étant plus important dans la forme pliée que dans la forme étirée, dans lequel la bague de blocage (25, 125) est placée entre la bride (22) du tuyau d'insertion (21) et la bague d'appui (28, 128) de telle manière que la bague de blocage (25, 125) possède, dans la première position du tuyau d'insertion (21), une forme sensiblement étirée et, dans la deuxième position du tuyau d'insertion (21), la forme pliée, où la bague de blocage, dans sa forme pliée, produit également un joint d'étanchéité entre le tuyau en plastique (1, 1*) et le tuyau d'insertion (21) par un serrage serré d'une partie de la bague de blocage (25, 125) entre le tuyau d'insertion (21) et la paroi annulaire de l'ouverture (5) dans le tuyau en plastique.

2. Ensemble de raccordement selon la revendication 1, dans lequel l'ensemble de raccordement comprend en outre une plaque support (30) pour la transmission à la surface extérieure du tuyau en plastique (1, 1*) de la force exercée par le moyen de verrouillage (36) pour la fixation du tuyau d'insertion (21) dans sa deuxième position.

3. Ensemble de raccordement selon la revendication 2, dans lequel la plaque support (30) a au moins une projection pour la fixation de la bague d'appui (28, 128) par rapport au tuyau en plastique (1, 1*).

4. Ensemble de raccordement selon l'une quelconque des revendications précédentes, dans lequel la bague d'appui (28, 128) est une bague fendue.

5. Ensemble de raccordement selon l'une quelconque des revendications précédentes, dans lequel le tuyau d'insertion (21) a un élargissement conique (21*) à proximité de son extrémité sur le côté qui est destiné à être inséré dans l'ouverture dans le tuyau en plastique (1, 1*).

6. Ensemble de raccordement selon l'une quelconque des revendications précédentes, dans lequel la bague de blocage (25, 125) a une rainure (26) s'étendant autour de la circonférence intérieure de la bague de blocage.

7. Ensemble de raccordement selon l'une quelconque des revendications précédentes, dans lequel l'extrémité d'insertion doit être couplée à un manchon lâche.

8. Ensemble de raccordement selon la revendication 2, dans lequel la plaque support (30) est intégrée avec un manchon dans un seul composant en plastique.

9. Procédé destiné à la fixation d'une branche cylindrique à un tuyau en plastique (1, 1*), lequel tuyau en plastique a une paroi (2) ayant une surface intérieure (3), une surface extérieure (4) et une épaisseur de paroi, lequel procédé inclut les étapes suivantes :
- la formation d'une ouverture (5) dans la paroi du tuyau en plastique (1, 1*), laquelle ouverture est délimitée par une paroi annulaire,
- l'insertion d'un tuyau d'insertion (21) dans l'ouverture (5) dans la paroi (2) du tuyau en plastique (1, 1*), lequel tuyau d'insertion a une bride (22) ayant un diamètre maximal qui est plus petit que le diamètre de l'ouverture (5) dans la paroi (2) du tuyau (1, 1*) et plus important que le diamètre extérieur du tuyau d'insertion (21),
- l'agencement d'une bague de blocage (25, 125) déformable sur la bride (22) du tuyau d'insertion (21), laquelle bague de blocage (25, 125) déformable peut prendre une forme étirée et une forme pliée, la bague de blocage (25, 125) étant essentiellement dans la forme étirée durant son agencement à la bride (22) du tuyau d'insertion (21), dans lequel la bague de blocage (25, 125), dans sa forme pliée, produit également un joint d'étanchéité entre le tuyau en plastique (1, 1*) et le tuyau d'insertion (21) par un serrage serré d'une partie de la bague de blocage (25, 125) entre le tuyau d'insertion (21) et la paroi annulaire de l'ouverture (5) dans le tuyau en plastique,
- l'agencement d'une bague d'appui (28, 128) à la bague de blocage (25, 125) de telle manière que la bague d'appui (28, 128) soit localisée entre le tuyau d'insertion (21) et la paroi annulaire de l'ouverture (5) dans la paroi (2) du tuyau en plastique (1, 1*),
- le verrouillage de la bague d'appui (25, 125) par rapport à la paroi annulaire de l'ouverture (5) dans la paroi du tuyau en plastique (1, 1*), la bague d'appui (25, 125) restant détachée du tuyau d'insertion (21),
- le déplacement du tuyau d'insertion (21) en utilisant un moyen de déplacement de telle manière que la bride (22) du tuyau d'insertion (21) soit rapprochée de la bague d'appui (28, 128), la bague de blocage (25, 125) étant amenée dans sa forme pliée du fait d'un pliage vers l'extérieur de la bague de blocage, forme pliée dans laquelle le diamètre extérieur de la bague de blocage est plus important que dans la forme étirée, et la bague de blocage (25, 125) ayant, dans la forme pliée, un diamètre extérieur qui est plus important que le diamètre de l'ouverture (5) dans le tuyau en plastique (21), le moyen de déplacement comprenant un levier qui agit sur le tuyaux d'insertion, de sorte que le levier vient en prise avec le tuyau d'insertion dans la deuxième position,
- le verrouillage de la position du tuyau d'insertion (21) par rapport au tuyau en plastique (1, 1*) en utilisant un moyen de verrouillage de telle manière que la forme pliée de la bague de blocage (25, 125) soit maintenue, la force requise pour le verrouillage étant absorbée par la surface extérieure (4) du tuyau en plastique (1, 1*), dans lequel le levier sert également de moyen de verrouillage, en configurant le levier de telle sorte qu'il soit attiré au-dessus d'une position de point mort lorsque le tuyau d'insertion est déplacé de la première position à la deuxième position.
